# EUROPÄISCHE PATENTSCHRIFT

(11) **EP 1 316 592 B1**
(45) Veröffentlichungstag und Bekanntmachung des Hinweises auf die Patenterteilung: **22.08.2007**
(21) Anmeldenummer: 02026325.7
(22) Anmeldetag: 21.11.2002
(51) Int. Cl.: C09D 5/03, C09D 7/06

(54) **Additive für Pulverlacke**
Additives for powder coatings
Additifs pour des peintures pulvérulentes

(30) Priorität: 30.11.2001 AT 18742001
(43) Veröffentlichungstag der Anmeldung: 04.06.2003
(73) Patentinhaber: Cytec Surface Specialties Austria GmbH, 8402 Werndorf (AT)
(72) Erfinder: Hobisch, Gerald, Dr. Prof., 8042 Graz (AT); Morre, Peter, 8020 Graz (AT); Cavalieri, Roberto, Dr., 35136 Padova (IT); Gazzea, Sergio, 36060 Romano d'Ezzelino (IT); Chinellato, Robertino, 30030 Chirignago (IT)
(74) Vertreter: Deckers, Hellmuth Alexander

(56) Entgegenhaltungen:
- EP-A- 0 362 643
- EP-A- 1 193 299
- WO-A-99/35195

## Beschreibung

Die Erfindung betrifft die Verwendung von Fluor- und Hydroxylgruppen-haltigen Copolymeren als Additive für Pulverlacke.

Gegenüber Flüssiglacken sind Pulverlacke eine kostengünstige und umweltfreundliche Alternative. Die Vernetzung der Bindemittel unter Ausbildung einer schützenden Lackschicht erfolgt meist durch thermische Aktivierung, indem die beschichteten Gegenstände in einem Ofen einer Temperatur von üblicherweise ca. 160 bis ca. 200 °C ausgesetzt werden. Mit der Erwärmung des Substrats schmilzt auch das Pulver dabei auf, in einem Temperaturbereich von üblicherweise ca. 80 bis ca. 120 °C und verläuft zu einem gleichmäßigen Film, der bei weiteren Erwärmen schließlich (ab ca. 110 bis ca. 140 °C) durch das Einsetzen der thermisch aktivierten Vernetzungsreaktion aushärtet. Die vollständige Vernetzung erfordert je nach der Reaktivität des verwendeten Systems zwischen 10 und 30 Minuten.

Da sich die Temperaturbereiche des Aufschmelz- und des Vernetzungsvorgangs überlappen und auch die Durchwärmung der Pulverlackschicht auf dem Substrat nie völlig homogen ist, finden Aufschmelzen und Vernetzen mitunter gleichzeitig statt; mit der beginnenden Vernetzung ist auch eine drastische Erhöhung der Viskosität gekoppelt, die das Fließen und damit die Ausbildung einer ebenen Oberfläche erschwert. Daher beobachtet man häufig in der Praxis Unebenheiten in der Beschichtung, man spricht von "Orangenhaut" und "Kratern", wobei die Kornstruktur des aufgebrachten Pulverlacks noch mehr oder weniger sichtbar ist. Bei ungenügender Benetzung des Untergrundes durch den aufgeschmolzenen Lack zeigen sich punktförmige kleine Täler in der Beschichtung, die wie Einstiche einer Nadel aussehen und daher im allgemeinen als "pinholes" bezeichnet werden.

Es besteht daher die Aufgabe, Pulverlacke so zu modifizieren, daß während des Aufschmelzvorgangs eine möglichst niedrige Viskosität und eine angepaßte Oberflächenspannung erzielt werden, ohne daß Ablauferscheinungen ("Nasen") sich an geneigten oder senkrechten Flächen zeigen.

Diese Aufgabe kann erfindungsgemäß durch Zusatz bestimmter Additive zu Pulverlacken gelöst werden, wobei als Additive bestimmte Fluor- und Hydroxylgruppen-haltige Copolymere eingesetzt werden. Die Additive verbessern den Verlauf der Lacke und verhindern oder vermindern die oben beschriebenen Oberflächenstörungen.

Fluor- und Hydroxylgruppen enthaltende Copolymere sind aus der EP-A 0 849 283 bekannt. Sie liegen als nicht-wäßrige Dispersionen vor, wobei sie mit Hydroxylgruppen-haltigen Harzen und Vernetzern gemeinsam zu Beschichtungsmitteln kombiniert werden. Die Verwendung als Additiv zu Pulverlacken ist nicht beschrieben.

Copolymere von Hydroxyalkylacrylaten und Fluoralkylacrylaten sind auch in den WO-A 97/01 114, EP-A 0 620 455, EP-A 0 563 047 und EP-A 0 167 634 bekannt, die für Kontaktlinsen eingesetzt werden. Die Verwendung dieser Copolymeren als Additiv zu Pulverlacken ist nicht beschrieben. Aus der nicht vorveröffentlichten Anmeldung EP 1 193 299 A2 ist ein verzweigtes Copolymer enthaltend ein radikalisch oder ionisch polymerisiertes Basismolekül bekannt, wobei makromonomere Einheiten zu einem Massenanteil von 1 % bis 60 % einpolymerisiert sind, die an einem Ende eine monomere Einheit mit einer äthylenisch ungesättigten Bindung aufweisen.

Weiter ist die Verwendung von derartigen Copolymeren als Additiv für anionisch stabilisierte wäßrige Beschichtungszusammensetzungen (EP-A 0 362 643) und (mit bestimmten Silanen copolymerisiert) als photopolymerisierbare Klebstoff (EP-A 0 583 471) bekannt. Auch hier ist die Verwendung als Additiv zu Pulverlacken nicht beschrieben.

Gegenstand der vorliegenden Erfindung ist daher die Verwendung von Copolymeren, die Fluorgruppen und Hydroxylgruppen enthalten, als Additive in Pulverlack-Zusammensetzungen, dadurch gekennzeichnet, daß sie Bausteine der folgenden Monomere enthalten:
**a)** olefinisch ungesättigte Monomere mit 5 bis 40 Kohlenstoffatomen, mit mindestens einer Hydroxylgruppe und mindestens einer radikalisch polymerisierbaren C=C-Doppelbindung, ausgewählt aus Hydroxyalkylestern von olefinisch ungesättigten Carbonsäuren und Mono- und Bis-hydroxyalkylestern von olefinisch ungesättigten Dicarbonsäuren
**b)** Alkylester von einfach olefinisch ungesättigten Monocarbonsäuren oder Dialkylester von olefinisch ungesättigten Dicarbonsäuren oder deren Mischungen, wobei die Alkylreste 1 bis 18 Kohlenstoffatome aufweisen, und die Carbonsäuren 3 bis 12 Kohlenstoffatome aufweisen,
**c)** (Per-)Fluoralkylester von den unter **b** genannten Carbonsäuren, wobei die (Per-)fluoralkylgruppe 2 bis 20 Kohlenstoffatome aufweist,
   sowie gegebenenfalls
**d)** olefinisch ungesättigte copolymerisierbare Monomere, die frei von Hydroxylgruppen, Säuregruppen, Amidgruppen und Fluorgruppen sind, und die nicht in die Gruppe b fallen, und
**e)** den unter **b** genannten olefinisch ungesättigten Carbonsäuren und/oder den Mono-Alkylestern der unter **b** genannten olefinisch ungesättigte Dicarbonsäuren mit C₁- bis C₂₀-Alkylresten,
wobei die genannten Monomerbausteine in den folgend genannten Massenanteilen (Masse der von den betreffenden Monomeren abgeleiteten Bausteine, dividiert durch die Masse des Polymeren, in "%" = cg/g oder g/100 g) im Polymer enthalten sind:
**a:** 5 bis 50 %; bevorzugt 7 bis 40 %; insbesondere 9 bis 35 %;
**b:** 35 bis 94,8 %; bevorzugt 40 bis 93 %; insbesondere 45 bis 91%;
**c:** 0,2 bis 15 %; bevorzugt 1 bis 12 %; insbesondere 2 bis 10 %;
**d:** 0,2 bis 15 %, falls vorhanden; und
**e:** 0,2 bis 15 %; bevorzugt 1 bis 12 %; insbesondere 2 bis 10 %; falls vorhanden,
wobei die Summe der Massenanteile stets 100 % ergeben muß.

Ein weiterer Gegenstand der vorliegenden Erfindung ist die Verwendung der erfindungsgemäßen Copolymeren als Additive für Pulverlacke auf Basis von gesättigten oder ungesättigten Polyestern, zur Verbesserung des Verlaufs und der Güte der Oberfläche der damit hergestellten Beschichtungen.

Ein weiterer Gegenstand der vorliegenden Erfindung sind Pulverlacke, insbesondere solche auf Basis von Polyestern, die die erfindungsgemäßen Copolymere als Additive enthalten, bevorzugt Pulver-Klarlacke, sowie die damit beschichteten Gegenstände.

Die Copolymeren weisen üblicherweise eine Hydroxylzahl von 15 bis 250 mg/g, vorzugsweise 20 bis 200 mg/g auf. Die Hydroxylzahl, nachfolgend "OHZ" genannt, ist gemäß DIN 53 240 definiert als der Quotient derjenigen Masse ***m***_{KOH} an Kaliumhydroxid, die genau soviel Hydroxylgruppen aufweist wie eine zu untersuchende Probe, und der Masse ***m***_{B} dieser Probe (Masse des Feststoffes in der Probe bei Lösungen oder Dispersionen); ihre übliche Einheit ist "mg/g".

Die (durch Gelpermeationschromatographie mit Polystyrol als Standard bestimmte) zahlenmittlere molare Masse Mₙ der Copolymeren liegt üblicherweise zwischen 1000 und 100 000 g/mol, vorzugsweise jedoch zwischen 1500 und 20.000 g/mol.

Bevorzugt sind die Monomeren **a** Hydroxyalkylester von olefinisch ungesättigten Carbonsäuren **a1,** wobei die Hydroxyalkylgruppe linear, verzweigt oder cyclisch sein kann und 2 bis 12 Kohlenstoffatome, bevorzugt bis zu 6, und insbesondere bis zu 4 Kohlenstoffatome enthält und bevorzugt ausgewählt ist aus den folgenden Resten: 2-Hydroxyäthyl, 2-Hydroxypropyl, 1-Hydroxy-2-propyl, 3-Hydroxypropyl, 2,2-Dimethyl-3-hydroxypropyl, 4-Hydroxybutyl, 2-Hydroxybutyl und 6-Hydroxyhexyl. Die olefinisch ungesättigten Carbonsäuren sind bevorzugt ausgewählt aus Acrylsäure, Methacrylsäure, Vinylessigsäure, Crotonsäure und Isocrotonsäure. Ebenso geeignet sind Bishydroxyalkylester von olefinisch ungesättigten Dicarbonsäuren **a2** wie die Bis-(2-hydroxyäthyl)ester und Bis-(hydroxypropyl)ester der Malein-, Fumar-, Itacon-, Citracon- oder Mesacon-Säure, sowie Monohydroxyalkylester der genannten Säuren, wobei die verbliebene Carboxylgruppe mit einem linearen, verzweigten oder cyclischen Alkanol mit 1 bis 20 Kohlenstoffatomen verestert ist.

Besonders bevorzugt sind Hydroxyäthyl(meth)acrylat, 3-Hydroxypropyl(meth)acrylat sowie die als Hydroxypropyl(meth)acrylat bezeichneten kommerziell erhältlichen Gemische der isomeren Additionsprodukte von Methyloxiran an (Meth)Acrylsäure, die 2-Hydroxypropyl(meth)acrylat und 1-Hydroxypropyl-2-(meth)acrylat enthalten, jeweils allein oder in Mischung untereinander.

Die Monomeren **b** sind Alkylester von einfach olefinisch ungesättigten Monocarbonsäuren wie unter **a1** genannt oder Dialkylester von olefinisch ungesättigten Dicarbonsäuren wie unter **a2** genannt oder deren Mischungen, wobei die Alkylreste linear, verzweigt oder cyclisch sein können und 1 bis 20 Kohlenstoffatome aufweisen, und die Carbonsäuren 3 bis 12 Kohlenstoffatome aufweisen. Bevorzugt sind Ester der Acryl- oder der Methacrylsäure sowie der Maleinsäure mit den Alkoholen Methanol, Äthanol, n- und iso-Propanol, n-, iso-, sek.- und tert.-Butanol, Amylalkohol, n-Hexanol, Cyclohexanol und 2-Äthylhexanol. Besonders bevorzugt werden Methylmethacrylat, Äthyl(meth)acrylat, n-Butyl(meth)acrylat, Dimethylmaleinat und 2-Äthylhexyl(meth)acrylat.

Die Monomeren **c** sind (Per-)Fluoralkylester der unter **a1** genannten Carbonsäuren, wobei die (Per-)fluoralkylgruppe 2 bis 20 Kohlenstoffatome aufweist. Geeignet sind beispielsweise Trifluoräthyl(meth)acrylat, Hexafluorisopropyl(meth)acrylat, Heptafluorbutyl(meth)acrylat und Perfluoroctyl(meth)acrylat. Bevorzugt werden die höheren Perfluoralkanole in bekannter Weise durch Telomerisation von Tetrafluoräthylen gewonnen und anschließend in die gewünschten Ester CₙF₂ₙ₊₁-O-CO-R mit n = 2 bis 20 überführt. Geeignet sind auch Ester teilfluorierter Alkohole, dabei sind die kommerziell erhältlichen Gemische der 2-Perfluoroalkyl-äthylester der Acryl- und Methacryl-Säure besonders bevorzugt.

Weitere Monomere, die gegebenenfalls zur Synthese der Copolymeren eingesetzt werden können, sind die der Gruppe d, nämlich olefinisch ungesättigte copolymerisierbare Monomere, die frei von Hydroxylgruppen, Säuregruppen, Amidgruppen und Fluorgruppen sind, und die nicht in die Gruppe **b** fallen, und die der Gruppe **e**, nämlich die unter **a1** genannten olefinisch ungesättigten Carbonsäuren und/oder den Mono-Alkylestern der unter **a2** genannten olefinisch ungesättigte Dicarbonsäuren mit linearen, verzweigten oder cyclischen C₁- bis C₂₀-Alkylresten.

Die Monomeren **d** umfassen vinylaromatische Verbindungen wie Styrol, α-Methylstyrol, die isomeren Vinyltoluole und deren Gemische, Chlorstyrol, weiter Vinylester von aliphatischen linearen, verzweigten oder cyclischen Carbonsäuren mit 1 bis 20 Kohlenstoffatomen, insbesondere Vinylacetat, den Vinylester der 2-Äthylhexansäure und die Vinylester von in α-Stellung verzweigten aliphatischen Carbonsäuren mit 5 bis 12 Kohlenstoffatomen (den sog. Koch-Säuren oder ®Versatic-Säuren), Vinylhalogenide wie Vinyl- und Vinylidenchlorid, und Nitrile wie Acryl- und Methacrylnitril.

Als Monomere **e** werden Acrylsäure, Methacrylsäure und deren Mischungen bevorzugt.

Die Herstellung der erfindungsgemäßen Copolymeren erfolgt als radikalische Polymerisation in einem geeignetem Lösemittel, welches vorzugsweise nach der Herstellung destillativ abgetrennt wird.

Die Copolymeren werden als Additive zur Verbesserung des Verlaufs und der Oberfläche in Pulverlacken eingesetzt. Dazu werden sie den Harzen, gegebenenfalls Pigmenten und sonstigen Zuschlagstoffen zugemischt und mit diesen in bekannter Weise durch Aufschmelzen und Mischen unterhalb der Vernetzungstemperatur homogenisiert. Der Massenanteil dieser Copolymeren als Additiv in dem fertigen Pulverlack beträgt üblicherweise 0,1 bis 3 %, bevorzugt 0,2 bis 2 %, und insbesondere 0,3 bis 1 %.

In bevorzugter Weise können die Copolymeren auch mit den in den Pulverlacken als Bindemittel eingesetzten Harzen oder anderen bei Raumtemperatur (20 °C) festen Harzen, z.B. gesättigten Polyesterharzen vorgemischt werden. Dazu können die Mischungen von Harzen und den Copolymeren gemeinsam in der Schmelze homogenisiert und nach Abkühlen zerkleinert werden. Das Ergebnis dieser Arbeitsweise bezeichnet man als "Masterbatch". Die Harze werden mit den Copolymeren beispielsweise in einem Extruder aufgeschmolzen und homogenisiert, das Extrudat wird nach Abkühlen auf den gewünschten Feinheitsgrad vermahlen. Dabei ist der Massenanteil an dem Copolymeren in der Mischung von Harz und Copolymeren üblicherweise zwischen 2 und 30 %, bevorzugt zwischen 4 und 20 %, und insbesondere von 6 bis 15 %.

Eine weitere Möglichkeit besteht darin, die Copolymeren in flüssiger Form (als Schmelze oder als Lösung) auf fein verteiltes Siliciumdioxid (Kieselsäure) aufzuziehen. Das erhaltenen Pulver ist leicht fließend und neigt nicht zum Verkleben. Dies Pulver läßt sich einfach in die gewünschte Pulverlack-Formulierung einmischen.

Die derart modifizierten Pulverlacke lassen sich einsetzen zur Beschichtung zum Beispiel von Metallen wie vor allem Stahl, Aluminium, Kupfer, von Kunstoffen, Holz, Natur- und Kunststeinen.

### Beispiele:

### 1 Herstellung der Additive:

In ein geeignetes Reaktionsgefäß mit Rührer und Rückflußkühler wurde das Lösungsmittel gefüllt, die Apparatur wurde evakuiert und mit Stickstoff belüftet. Dann wurde das Lösungsmittel auf Rückflußtemperatur erhitzt, die Zugabe der Monomerenmischung und der Initiatorlösung erfolgte gleichzeitig und gleichmäßig in der angegebenen Zeit (siehe Tabelle 1). Nach Zugabeende wurde die Temperatur unter weiterem Rühren zum Abschließen der Reaktion noch zwei Stunden beibehalten, danach wurde der Feststoffgehalt in der Reaktionslösung zur Umsatzkontrolle bestimmt. Nach Erreichen des gewünschten Feststoffgehaltes (wobei solange noch weiter bei der Reaktionstemperatur gerührt wurde) wurde das Lösungsmittel durch Destillation unter vermindertem Druck entfernt, so daß ein Feststoffgehalt (Festkörper-Massenanteil) von über 97 % erreicht wird.

**Tabelle 1 Monomerzusammensetzung, Polymerisationsbedingungen und Charakteristika der erhaltenen Copolymeren**

| | Monomere (Masse in g) | B1 | B2 | B3 | B4 | B5 | V |
|---|---|---|---|---|---|---|---|
| A | Hydroxyäthylacrylat | 10 | - | - | 15 | 25 | - |
| | Hydroxyähylmethacrylat | - | - | 30 | - | - | - |
| | 4-Hydroxybutylacrylat | - | 13 | - | - | - | - |
| B | Methylmethacrylat | 5 | 10 | - | - | 10 | 15 |
| | Ähylacrylat | 10 | - | - | 10 | - | 20 |
| | Butylacrylat | 30 | 40 | 20 | 20 | 15 | 15 |
| | 2-Ähylhexylacrylat | 40 | 25 | 30 | 40 | 40 | 40 |
| C | 2-Perfluoralkylacrylat* | 3 | 5 | - | - | 8 | - |
| | 2-Perfluoralkylmethacrylat** | - | - | 7 | 5 | - | - |
| D | Styrol | - | - | 13 | 10 | 2 | 5 |
| E | Acrylsäure | 2 | - | - | - | - | 5 |
| | Methacrylsäure | - | 7 | - | - | - | - |

| Massenverhältnis Initiator zu Monomeren in % | | | | | | | |
|---|---|---|---|---|---|---|---|
| | Di-t-butylperoxide | - | 1,5 | - | 2 | - | - |
| | Azobisisovaleronitril | 1 | - | 1,8 | - | 1,5 | 1 |
| | Butylacetat | 70 | - | - | - | - | 75 |
| | Butanol | - | 60 | - | - | 80 | - |
| | Isopropanol | - | - | 75 | - | - | - |
| | Methoxypropanol | - | - | - | 50 | - | - |
| | Zugabe-Zeitraum in h | 6 | 6 | 8 | 6 | 12 | 8 |
| | Polymerisationstemperatur in °C | 120..125 | 118..124 | 82..86 | 115..120 | 118..124 | 120..125 |
| | OHN des Copolymeren in mg/g | 49 | 51 | 129 | 74 | 123 | 0 |

| | | | | | | | |
|---|---|---|---|---|---|---|---|
| *: ®Zonyl TA-N, DuPont, 2-Perfluoralkyläthylacrylat mit einer Kettenlänge des Perfluoralkylrestes von 6 bis 18 Kohlenstoffatomen **: ®Fluowet AC 600, Clariant, 2-Perfluoralkyläthylacrylat mit einer Kettenlänge des Perfluoralkylrestes von 4 bis 10 Kohlenstoffatomen | | | | | | | |

### Herstellung eines Masterbatch:

In einem Reaktionsgefäß wurden 473 g Neopentylglykol, 669 g Propylenglykol, 3 g Monobutylzinnoxid, 72 g Trimethylolpropan und 2037 g Terephthalsäure unter guter Durchmischung langsam auf 240 °C erhitzt. Das bei der Veresterung gebildete Wasser wurde zunächst bei Normaldruck, später unter vermindertem Druck abdestilliert. Nachdem eine Säurezahl von 5 mg/g und eine Viskosität der Schmelze von 5000 mPa·s bei 200 °C erreicht waren, wurde die Reaktionsmischung auf 190 °C abgekühlt und 310 g des Copolymeren B1 aus Beispiel 1 zugegeben. Die Mischung wurde 15 Minuten unter Rühren homogenisiert, dann auf ein Kühlblech ausgegossen und gebrochen. Das Material wurde als M1 bezeichnet.

Der Ansatz wurde wiederholt, jedoch anstelle des Copolymeren B 1 aus Beispiel 1 wurden jeweils die anderen Copolymeren B2 bis B5 und V aus Beispiel 1 in der jeweils gleichen Menge zu der Polyesterschmelze gegeben. Die so hergestellten Mischungen wurden als M2 bis M5 und als Vergleichsmischung MV bezeichnet.

Die Säurezahl ist gemäß DIN EN ISO 3682 (DIN 53 402) definiert als der Quotient derjenigen Masse ***m***_{KOH} an Kaliumhydroxid, die erforderlich ist, um eine zu untersuchende Probe zu neutralisieren, und der Masse ***m***_{B} dieser Probe (Masse des Feststoffes in der Probe bei Lösungen oder Dispersionen); ihre übliche Einheit ist "mg/g".

### 3 Prüfung der Additive:

Die Prüfung der erfindungsgemäßen Zusatzstoffe erfolgte in einem Pulverlack basierend auf einem Polyesterharz (®Alftalat AN 725, der Fa. Solutia Italy S.p.A., gesättigter Polyester mit einer Schmelztemperatur von ca. 80 °C und einer Säurezahl von ca. 34 mg/g), wobei die folgende Rezeptur verwendet wurde:

### Pulverlack P1:

| | |
|---|---|
| Polyesterharz | 865 g |
| Triglycidylisocyanurat | 70 g |
| Mischung M1 aus Beispiel 2 | 60 g |
| Benzoin | 5 g |

Die Pulver-Klarlack-Zusammensetzung wurde in einem Doppelschnecken-Extruder (Temperaturzonen: 80 °C / 100 °C / 100 °C) mit einer Schneckendrehzahl von 300 /min aufgeschmolzen und homogenisiert. Das Extrudat wurde gekühlt und vermahlen zu einem Pulverlack P1 mit einer durchschnittlichen Korngröße von ca. 40 µm.

Analog wurden Pulverlacke P2 bis P5 und PV mit den Mischungen M2 bis M5 und MV aus Beispiel 2 hergestellt.

### Flow-Test nach Norton:

Bei diesem Test wurden jeweils 0,5 g des applikationsfertigen Pulverlacks in Form einer runden Schüttung mit einem Durchmesser von 25 mm auf eine Glasplatte aufgetragen und mit einer Neigung von 60° bei 180 °C gehärtet. Zur Auswertung wurde die Fließstrecke von der Auftragsstelle bis zur vorderen Fließkante (gemessen in mm) herangezogen. Je besser die Fließeigenschaften sind, desto länger ist die Fließstrecke.

### Herstellung der Beschichtung und deren Beurteilung:

Die Pulverlacke P1 bis P5 und PV wurden mit mit Corona-Pistolen auf Stahlplatten aufgebracht und bei 180 °C während 20 Minuten gehärtet. Es resultierten Lackfilme mit einer Schichtdicke von ca. 60 bis 70 µm.
Verlauf, Krater, "Pinholes" (nadelstichartige Oberflächen-Unregelmäßigkeiten) und die Transparenz wurden nach den angegebenen Methoden beurteilt.

Die Ergebnisse des Flow-Tests und die Beurteilung der Beschichtungen sind in der Tabelle 2 zusammengefaßt.

**Tabelle 2 Wirksamkeit der Additive aus Beispiel 1**

| | | | | | | |
|---|---|---|---|---|---|---|
| Pulverlack | P1 | P2 | P3 | P4 | P5 | PV |
| Flow-Test in mm | 57 | 65 | 59 | 68 | 63 | 46 |
| Verlauf | 5 | 6 | 5 | 7 | 5 | 3 |
| Krater | 1 m 1 g | 0m 0g | 0m 0g | 0m 0g | 1m 1g | 3m 2g |
| Pinholes | 1m 1g | 0m 0g | 0m 0g | 0m 0g | 0m 0g | 2m 1g |
| Transparenz | gut | gut | gut | sehr gut | gut | noch gut |

### Erläuterung:

| | |
|---|---|
| Verlauf: | visuelle Beurteilung von 10 = sehr gut bis 0 = sehr schlecht |
| Krater und Pinholes: | visuelle Beurteilung entsprechend DIN 53230 0m0g = sehr gut ... 5m5g = sehr schlecht |
| Transparenz: | visuelle Beurteilung |

Es zeigt sich, daß durch Verwendung der erfindungsgemäßen Additive die Fließfähigkeit vor dem Einsetzen der Vernetzung verbessert wird. Dies zeigt sich sowohl in der (objektiven) Maßzahl aus dem "Flow-Test", als auch bei der visuellen Beurteilung der Oberfläche der ausgehärteten Beschichtung nach verschiedenen Kriterien. Bei der Vergleichsprobe war auf der Oberfläche noch die Struktur der aufgebrachten Pulverlack-Teilchen zu erkennen.

## Patentansprüche (Patentansprüche für folgende(n) Vertragsstaat(en): AT, BE, CH, CY, DE, DK, ES, FI, FR, GB, GR, IE, IT, LI, LU, MC, NL, PT, SE, TR)

1. Verwendung von Copolymeren, die Fluorgruppen und Hydroxylgruppen enthalten, als Additive in Pulverlacken, **dadurch gekennzeichnet, daß** Copolymere eingesetzt werden, die Bausteine der folgenden Monomere enthalten:
**a)** olefinisch ungesättigten Monomere mit 5 bis 40 Kohlenstoffatomen, mit mindestens einer Hydroxylgruppe und mindestens einer radikalisch polymerisierbaren C=C-Doppelbindung, ausgewählt aus Hydroxyalkylestern von olefinisch ungesättigten Carbonsäuren und Mono- und Bis-hydroxyalkylestern von olefinisch ungesättigten Dicarbonsäuren
**b)** Alkylester von einfach olefinisch ungesättigten Monocarbonsäuren oder Dialkylester von olefinisch ungesättigten Dicarbonsäuren oder deren Mischungen, wobei die Alkylreste 1 bis 18 Kohlenstoffatome aufweisen, und die Carbonsäuren 3 bis 12 Kohlenstoffatome aufweisen,
**c)** (Per-)Fluoralkylester von den unter b genannten Carbonsäuren, wobei die (Per-)fluoralkylgruppe 2 bis 20 Kohlenstoffatome aufweist,
wobei die genannten Monomerbausteine zu den folgend genannten Massenanteilen im Polymer enthalten sind:
**a**: 5 % bis 50 %;
**b**: 35 % bis 94,8 %;
**c**: 0,2 % bis 15 %,
und wobei die Summe der Massenanteile stets 100 % ergeben muß.

2. Verwendung gemäß Anspruch 1, **dadurch gekennzeichnet, daß** Copolymere eingesetzt werden, die die Monomerbausteine **a**, **b** und **c** zu den folgend genannten Massenanteilen im Polymer enthalten:
**a**: 7 % bis 40 %;
**b**: 40 % bis 93 %;
**c**: 1 % bis 12 %,
wobei die Summe der Massenanteile stets 100 % ergeben muß.

3. Verwendung gemäß Anspruch 1, **dadurch gekennzeichnet, daß** die eingesetzten Copolymere zusätzlich Bausteine enthalten abgeleitet von
**d**) olefinisch ungesättigten copolymerisierbaren Monomere, die frei von Hydroxylgruppen, Säuregruppen, Amidgruppen und Fluorgruppen sind, und die nicht in die Gruppe **b** fallen.

4. Verwendung gemäß Anspruch 1 oder 3, **dadurch gekennzeichnet, daß** die eingesetzten Copolymere zusätzlich Bausteine enthalten abgeleitet von
**e)** den unter **b** genannten olefinisch ungesättigten Carbonsäuren und/oder den Mono-Alkylestern der unter **b** genannten olefinisch ungesättigte Dicarbonsäuren mit C₁- bis C₂₀-Alkylresten.

5. Verwendung gemäß Anspruch 3, **dadurch gekennzeichnet, daß** die von den Monomeren **d** abgeleiteten Bausteine im Copolymeren zu einem Massenanteil von 0,2 % bis 15 % enthalten sind.

6. Verwendung gemäß Anspruch 4, **dadurch gekennzeichnet, daß** die von den Monomeren **e** abgeleiteten Bausteine im Copolymeren zu einem Massenanteil von 0,2 % bis 15 % enthalten sind.

7. Verwendung gemäß Anspruch 1, **dadurch gekennzeichnet, daß** die Monomeren **a** Hydroxyäthyl(meth)acrylat, 3-Hydroxypropyl(meth)acrylat, 2-Hydroxypropylmethacrylat und/oder 1-Hydroxypropyl-2-methacrylat sind.

8. Verwendung gemäß Anspruch 1, **dadurch gekennzeichnet, daß** die Monomeren **b** Methylmethacrylat, Äthyl(meth)acrylat, n-Butyl(meth)acrylat, Dimethylmaleinat und/oder 2-Äthylhexyl(meth)acrylat sind.

9. Verwendung gemäß Anspruch 1, **dadurch gekennzeichnet, daß** die Monomeren **c** Trifluoräthyl(meth)acrylat, Hexafluorisopropyl(meth)acrylat, Heptafluorbutyl(meth)acrylat und/oder Perfluoroctyl(meth)acrylat sind.

10. Verwendung gemäß Anspruch 1, **dadurch gekennzeichnet, daß** die Copolymeren in dem fertigen Pulverlack in einem Massenanteil von 0,1 % bis 3 % vorliegen.

11. Verwendung gemäß Anspruch 1, **dadurch gekennzeichnet, daß** die Copolymeren mit bei 20 °C festen Harzen in der Schmelze zu einem Konzentrat homogenisiert und nach Abkühlen zerkleinert werden, wobei der Massenanteil an dem Copolymeren in der Mischung von Harz und Copolymeren zwischen 2 % und 30 % beträgt.

12. Verwendung gemäß Anspruch 1, **dadurch gekennzeichnet, daß** die Copolymeren in flüssiger Form auf fein verteiltes Siliciumdioxid aufgezogen und das erhaltene Pulver in die Pulverlack-Formulierung eingemischt wird.

13. Pulverlacke enthaltend Copolymere, die Bausteine der folgenden Monomere aufweisen:
**a)** olefinisch ungesättigten Monomere mit 5 bis 40 Kohlenstoffatomen, mit mindestens einer Hydroxylgruppe und mindestens einer radikalisch polymerisierbaren C=C-Doppelbindung, ausgewählt aus Hydroxyalkylestern von olefinisch ungesättigten Carbonsäuren und Mono- und Bis-hydroxyalkylestern von olefinisch ungesättigten Dicarbonsäuren,
**b)** Alkylester von einfach olefinisch ungesättigten Monocarbonsäuren oder Dialkylester von olefinisch ungesättigten Dicarbonsäuren oder deren Mischungen, wobei die Alkylreste 1 bis 18 Kohlenstoffatome aufweisen, und die Carbonsäuren 3 bis 12 Kohlenstoffatome aufweisen,
**c**) (Per-)Fluoralkylester von den unter **b** genannten Carbonsäuren, wobei die (Per-)fluoralkylgruppe 2 bis 20 Kohlenstoffatome aufweist,
wobei die genannten Monomerbausteine zu den folgend genannten Massenanteilen im Polymer enthalten sind:
**a**: 5 % bis 50 %;
**b**: 35 % bis 94,8 %;
**c**: 0,2 % bis 15 %,
und wobei die Summe der Massenanteile stets 100 % ergeben muß.

## Patentansprüche (Patentansprüche für folgende(n) Vertragsstaat(en): BG, CZ, EE, SK)

1. Additive in Pulverlacken, **dadurch gekennzeichnet, daß** Copolymere eingesetzt werden, die Bausteine der folgenden Monomere enthalten:
**a**) olefinisch ungesättigten Monomere mit 5 bis 40 Kohlenstoffatomen, mit mindestens einer Hydroxylgruppe und mindestens einer radikalisch polymerisierbaren C = C-Doppelbindung, ausgewählt aus Hydroxyalkylestern von olefinisch ungesättigten Carbonsäuren und Mono- und Bis-hydroxyalkylestern von olefinisch ungesättigten Dicarbonsäuren
**b**) Alkylester von einfach olefinisch ungesättigten Monocarbonsäuren oder Dialkylester von olefinisch ungesättigten Dicarbonsäuren oder deren Mischungen, wobei die Alkylreste 1 bis 18 Kohlenstoffatome aufweisen, und die Carbonsäuren 3 bis 12 Kohlenstoffatome aufweisen,
**c**) (Per-)Fluoralkylester von den unter **b** genannten Carbonsäuren, wobei die (Per-)fluoralkylgruppe 2 bis 20 Kohlenstoffatome aufweist.

2. Verwendung gemäß Anspruch 1, **dadurch gekennzeichnet, daß** Copolymere eingesetzt werden, die die genannten Monomerbausteine zu den folgend genannten Massenanteilen im Polymer enthalten:
**a**: 5 bis 50 %;
**b**: 35 bis 94,8 %;
**c**: 0,2 bis 15%,
wobei die Summe der Massenanteile stets 100 % ergeben muß.

3. Verwendung gemäß Anspruch 1, **dadurch gekennzeichnet, daß** die eingesetzten Copolymere zusätzlich Bausteine enthalten abgeleitet von
**d**) olefinisch ungesättigten copolymerisierbaren Monomere, die frei von Hydroxylgruppen, Säuregruppen, Amidgruppen und Fluorgruppen sind, und die nicht in die Gruppe **b** fallen.

4. Verwendung gemäß Anspruch 1 oder 3, **dadurch gekennzeichnet, daß** die eingesetzten Copolymere zusätzlich Bausteine enthalten abgeleitet von
**e)** den unter **b** genannten olefinisch ungesättigten Carbonsäuren und/oder den Mono-Alkylestern der unter **b** genannten olefinisch ungesättigte Dicarbonsäuren mit C₁- bis C₂₀-Alkylresten.

5. Verwendung gemäß Anspruch 3, **dadurch gekennzeichnet, daß** die von den Monomeren **d** abgeleiteten Bausteine im Copolymeren zu einem Massenanteil von 0,2 bis 15 % enthalten sind.

6. Verwendung gemäß Anspruch 4, **dadurch gekennzeichnet, daß** die von den Monomeren **e** abgeleiteten Bausteine im Copolymeren zu einem Massenanteil von 0,2 bis 15 % enthalten sind.

7. Verwendung gemäß Anspruch 1, **dadurch gekennzeichnet, daß** die Monomeren **a** Hydroxyäthyl(meth)acrylat, 3-Hydroxypropyl(meth)acrylat, 2-Hydroxypropylmethacrylat und/oder 1-Hydroxypropyl-2-methacrylat sind.

8. Verwendung gemäß Anspruch 1, **dadurch gekennzeichnet, daß** die Monomeren **b** Methylmethacrylat, Äthyl(meth)acrylat, n-Butyl(meth)acrylat, Dimethylmaleinat und/oder 2-Äthylhexyl(meth)acrylat sind.

9. Verwendung gemäß Anspruch 1, **dadurch gekennzeichnet, daß** die Monomeren **c** Trifluoräthyl(meth)acrylat, Hexafluorisopropyl(meth)acrylat, Heptafluorbutyl(meth)acrylat und/oder Perfluoroctyl(meth)acrylat sind.

10. Verwendung gemäß Anspruch 1, **dadurch gekennzeichnet, daß** die Copolymeren in dem fertigen Pulverlack in einem Massenanteil von 0,1 bis 3 % vorliegen.

11. Verwendung gemäß Anspruch 1, **dadurch gekennzeichnet, daß** die Copolymeren mit bei 20 °C festen Harzen in der Schmelze zu einem Konzentrat homogenisiert und nach Abkühlen zerkleinert werden, wobei der Massenanteil an dem Copolymeren in der Mischung von Harz und Copolymeren zwischen 2 und 30 % beträgt.

12. Verwendung gemäß Anspruch 1, **dadurch gekennzeichnet, daß** die Copolymeren in flüssiger Form auf fein verteiltes Siliciumdioxid aufgezogen und das erhaltene Pulver in die Pulverlack-Formulierung eingemischt wird.

13. Pulverlacke enthaltend Copolymere, die Bausteine der folgenden Monomere aufweisen:
**a**) olefinisch ungesättigten Monomere mit 5 bis 40 Kohlenstoffatomen, mit mindestens einer Hydroxylgruppe und mindestens einer radikalisch polymerisierbaren C=C-Doppelbindung, ausgewählt aus Hydroxyalkylestern von olefinisch ungesättigten Carbonsäuren und Mono- und Bis-hydroxyalkylestern von olefinisch ungesättigten Dicarbonsäuren,
**b**) Alkylester von einfach olefinisch ungesättigten Monocarbonsäuren oder Dialkylester von olefinisch ungesättigten Dicarbonsäuren oder deren Mischungen, wobei die Alkylreste 1 bis 18 Kohlenstoffatome aufweisen, und die Carbonsäuren 3 bis 12 Kohlenstoffatome aufweisen,
**c**) (Per-)Fluoralkylester von den unter **b** genannten Carbonsäuren, wobei die (Per-)-fluoralkylgruppe 2 bis 20 Kohlenstoffatome aufweist.

## Claims (Claims for the following Contracting State(s): AT, BE, CH, CY, DE, DK, ES, FI, FR, GB, GR, IE, IT, LI, LU, MC, NL, PT, SE, TR)

1. The use of copolymers containing fluorine groups and hydroxyl groups as additives in powder coating materials, wherein copolymers are used which comprise units of the following monomers:
a) olefinically unsaturated monomers having 5 to 40 carbon atoms, having at least one hydroxyl group and at least one free-radically polymerizable C=C double bond, selected from hydroxyalkyl esters of olefinically unsaturated carboxylic acids and mono- and bis-hydroxyalkyl esters of olefinically unsaturated dicarboxylic acids,
b) alkyl esters of monoolefinically unsaturated monocarboxylic acids or dialkyl esters of olefinically unsaturated dicarboxylic acids or mixtures thereof, the alkyl radicals having 1 to 18 carbon atoms and the carboxylic acids having 3 to 12 carbon atoms,
c) (per)fluoroalkyl esters of the carboxylic acids specified under b, the (per)fluoroalkyl group having 2 to 20 carbon atoms,
the stated monomer units being present in the polymer in the following mass fractions:
a: 5 % to 50 %;
b: 35 % to 94.8 %;
c: 0.2 % to 15 %;
and the sum of the mass fractions necessarily being 100 % in each case.

2. The use as claimed in claim 1, wherein copolymers are used which comprise the monomer units a, b and c in the polymer in the following mass fractions:
a: 7 % to 40 %;
b: 40 % to 93 %;
c: 1 % to 12 %;
the sum of the mass fractions necessarily being 100 % in each case.

3. The use as claimed in claim 1, wherein the copolymers employed further comprise units derived from
d) olefinically unsaturated copolymerizable monomers which are free from hydroxyl groups, acid groups, amide groups, and fluorine groups and which do not fall within group b.

4. The use as claimed in claim 1 or 3, wherein the copolymers employed further comprise units derived from
e) the olefinically unsaturated carboxylic acids specified under b and/or the monoalkyl esters of the olefinically unsaturated dicarboxylic acids specified under b and having C₁ to C₂₀ alkyl radicals.

5. The use as claimed in claim 3, wherein the units derived from the monomers d are present in the copolymer in a mass fraction of 0.2 % to 15 %.

6. The use as claimed in claim 4, wherein the units derived from the monomers e are present in the copolymer in a mass fraction of 0.2 % to 15 %.

7. The use as claimed in claim 1, wherein the monomers a are hydroxyethyl (meth)acrylate, 3-hydroxypropyl (meth)acrylate, 2-hydroxypropyl methacrylate and/or 1-hydroxyprop-2-yl methacrylate.

8. The use as claimed in claim 1, wherein the monomers b are methyl methacrylate, ethyl (meth)acrylate, n-butyl (meth)acrylate, dimethyl maleate and/or 2-ethylhexyl (meth)acrylate.

9. The use as claimed in claim 1, wherein the monomers c are trifluoroethyl (meth)acrylate, hexafluoroisopropyl (meth)acrylate, heptafluorobutyl (meth)acrylate and/or perfluorooctyl (meth)acrylate.

10. The use as claimed in claim 1, wherein the copolymers are present in the completed powder coating material in a mass fraction of 0.1 % to 3 %.

11. The use as claimed in claim 1, wherein the copolymers are homogenized with resins that are solid at 20°C, in the melt, to form a concentrate and, after cooling, are comminuted, the mass fraction of the copolymer in the mixture of resin and copolymers being between 2 % and 30 %.

12. The use as claimed in claim 1, wherein the copolymers are applied in liquid form to finely divided silicon dioxide and the powder obtained is incorporated into the powder coating formulation by mixing.

13. A powder coating material comprising copolymers which have units of the following monomers:
a) olefinically unsaturated monomers having 5 to 40 carbon atoms, having at least one hydroxyl group and at least one free-radically polymerizable C=C double bond, selected from hydroxyalkyl esters of olefinically unsaturated carboxylic acids and mono- and bis-hydroxyalkyl esters of olefinically unsaturated dicarboxylic acids,
b) alkyl esters of monoolefinically unsaturated monocarboxylic acids or dialkyl esters of olefinically unsaturated dicarboxylic acids or mixtures thereof, the alkyl radicals having 1 to 18 carbon atoms and the carboxylic acids having 3 to 12 carbon atoms,
c) (per)fluoroalkyl esters of the carboxylic acids specified under b, the (per)fluoroalkyl group having 2 to 20 carbon atoms,
the stated monomer units being present in the polymer in the following mass fractions:
a: 5 % to 50 %;
b: 35 % to 94.8 %;
c: 0.2 % to 15 %;
and the sum of the mass fractions necessarily being 100 % in each case.

## Claims (Claims for the following Contracting State(s): BG, CZ, EE, SK)

1. The use of copolymers containing fluorine groups and hydroxyl groups as additives in powder coating materials, wherein copolymers are used which comprise units of the following monomers:
a) olefinically unsaturated monomers having 5 to 40 carbon atoms, having at least one hydroxyl group and at least one free-radically polymerizable C=C double bond, selected from hydroxyalkyl esters of olefinically unsaturated carboxylic acids and mono- and bis-hydroxyalkyl esters of olefinically unsaturated dicarboxylic acids,
b) alkyl esters of monoolefinically unsaturated monocarboxylic acids or dialkyl esters of olefinically unsaturated dicarboxylic acids or mixtures thereof, the alkyl radicals having 1 to 18 carbon atoms and the carboxylic acids having 3 to 12 carbon atoms,
c) (per)fluoroalkyl esters of the carboxylic acids specified under b, the (per)fluoroalkyl group having 2 to 20 carbon atoms.

2. The use as claimed in claim 1, wherein copolymers are used which comprise the stated monomer units in the polymer in the following mass fractions:
a: 5 to 50 %;
b: 35 to 94.8 %;
c: 0.2 to 15 %;
the sum of the mass fractions necessarily being 100 % in each case.

3. The use as claimed in claim 1, wherein copolymers employed further comprise units derived from
d) olefinically unsaturated copolymerizable monomers which are free from hydroxyl groups, acid groups, amide groups, and fluorine groups and which do not fall within group b.

4. The use as claimed in claim 1 or 3, wherein the copolymers employed further comprise units derived from
e) the olefinically unsaturated carboxylic acids specified under b and/or the monoalkyl esters of the olefinically unsaturated dicarboxylic acids specified under b and having C₁ to C₂₀ alkyl radicals.

5. The use as claimed in claim 3, wherein the units derived from the monomers d are present in the copolymer in a mass fraction of 0.2 to 15 %.

6. The use as claimed in claim 4, wherein the units derived from the monomers e are present in the copolymer in a mass fraction of 0.2 to 15 %.

7. The use as claimed in claim 1, wherein the monomers a are hydroxyethyl (meth)acrylate, 3-hydroxypropyl (meth)acrylate, 2-hydroxypropyl methacrylate and/or 1-hydroxyprop-2-yl methacrylate.

8. The use as claimed in claim 1, wherein the monomers b are methyl methacrylate, ethyl (meth)acrylate, n-butyl (meth)acrylate, dimethyl maleate and/or 2-ethylhexyl (meth)acrylate.

9. The use as claimed in claim 1, wherein the monomers c are trifluoroethyl (meth)acrylate, hexafluoroisopropyl (meth)acrylate, heptafluorobutyl (meth)acrylate and/or perfluorooctyl (meth)acrylate.

10. The use as claimed in claim 1, wherein the copolymers are present in the completed powder coating material in a mass fraction of 0.1 to 3 %.

11. The use as claimed in claim 1, wherein the copolymers are homogenized with resins that are solid at 20°C, in the melt, to form a concentrate and, after cooling, are comminuted, the mass fraction of the copolymer in the mixture of resin and copolymers being between 2 % and 30 %.

12. The use as claimed in claim 1, wherein the copolymers are applied in liquid form to finely divided silicon dioxide and the powder obtained is incorporated into the powder coating formulation by mixing.

13. A powder coating material comprising copolymers which have units of the following monomers:
a) olefinically unsaturated monomers having 5 to 40 carbon atoms, having at least one hydroxyl group and at least one free-radically polymerizable C=C double bond, selected from hydroxyalkyl esters of olefinically unsaturated carboxylic acids and mono- and bis-hydroxyalkyl esters of olefinically unsaturated dicarboxylic acids,
b) alkyl esters of monoolefinically unsaturated monocarboxylic acids or dialkyl esters of olefinically unsaturated dicarboxylic acids or mixtures thereof, the alkyl radicals having 1 to 18 carbon atoms and the carboxylic acids having 3 to 12 carbon atoms,
c) (per)fluoroalkyl esters of the carboxylic acids specified under b, the (per)fluoroalkyl group having 2 to 20 carbon atoms.

## Revendications (Revendications pour l'(les) Etat(s) contractant(s) suivant(s): AT, BE, CH, CY, DE, DK, ES, FI, FR, GB, GR, IE, IT, LI, LU, MC, NL, PT, SE, TR)

1. Utilisation de copolymères contenant des groupes fluoro et des groupes hydroxy, comme additifs dans des laques en poudre, **caractérisée en ce qu'**on utilise des copolymères qui contiennent des motifs des monomères suivants :
**a**) des monomères à insaturation oléfinique, ayant de 5 à 40 atomes de carbone, comportant au moins un groupe hydroxy et au moins une double liaison C=C polymérisable par voie radicalaire, choisis parmi les esters hydroxyalkyliques d'acides carboxyliques à insaturation oléfinique et les mono- et diesters hydroxyalkyliques d'acides dicarboxyliques à insaturation oléfinique,
**b**) des esters alkyliques d'acides monocarboxyliques à insaturation mono-oléfinique ou des diesters alkyliques d'acides dicarboxyliques à insaturation oléfinique ou des mélanges de ceux-ci, où les radicaux alkyle ont de 1 à 18 atomes de carbone, et où les acides carboxyliques ont de 3 à 12 atomes de carbone,
**c)** des esters (per)fluoroalkyliques des acides carboxyliques mentionnés en **b,** où le groupe (per)fluoroalkylique a de 2 à 20 atomes de carbone,
où les motifs monomères précités sont contenus dans le polymère en les proportions massiques suivantes :
**a** : 5 % à 50 %,
**b** : 35 % à 94,8 %,
**c**: 0,2 à 15 %,
et où la somme de ces proportions massiques est toujours égale à 100 %.

2. Utilisation selon la revendication 1, **caractérisée en ce qu'**on utilise des copolymères qui contiennent les motifs monomères **a, b** et **c** en les proportions massiques suivantes dans le polymère :
**a** : 7 % à 40 %,
**b**: 40 % à 93 %,
**c**: 1 à 12 %,
et où la somme des proportions en masses est toujours égale à 100 %.

3. Utilisation selon la revendication 1, **caractérisée en ce que** les copolymères utilisés contiennent en outre des motifs dérivés
d) de monomères copolymérisables à insaturation oléfinique, qui sont exempts de groupes hydroxy, de groupes acides, de groupes amido et de groupes fluoro, et qui ne rentrent pas dans le groupe **b.**

4. Utilisation selon la revendication 1 ou 3, **caractérisée en ce que** les copolymères utilisés contiennent en outre des motifs dérivés
e) des acides carboxyliques à insaturation oléfinique mentionnés en **b** et/ou des monoesters alkyliques des acides carboxyliques à insaturation oléfinique mentionnés en b, comportant des radicaux alkyle en C₁-C₂₀.

5. Utilisation selon la revendication 3, **caractérisée en ce que** les motifs dérivés des monomères **d** sont contenus dans le copolymère en une proportion en masse allant de 0,2 % à 15 %.

6. Utilisation selon la revendication 4, **caractérisée en ce que** les motifs dérivés des monomères e sont contenus dans le copolymère en une proportion en masse allant de 0,2 % à 15 %.

7. Utilisation selon la revendication 1, **caractérisée en ce que** les monomères a sont le (méth)acrylate d'hydroxyéthyle, le (méth)acrylate de 3-hydroxypropyle, le méthacrylate de 2-hydroxypropyle et/ou le 2-méthacrylate de 1-hydroxypropyle,

8. Utilisation selon la revendication 1, **caractérisée en ce que** les monomères **b** sont le méthacrylate de méthyle, le (méth)acrylate d'éthyle, le (méth)acrylate de n-butyle, le maléate de diméthyle et/ou le (méth)acrylate de 2-éthylhexyle.

9. Utilisation selon la revendication 1, **caractérisée en ce que** les monomères c sont le (méth)acrylate de trifluoroéthyle, le (méth)acrylate d'hexafluoro-isopropyle, le (méth)acrylate d'heptafluorobutyle et/ou le (méth)acrylate de perfluoro-octyle.

10. Utilisation selon la revendication 1, **caractérisée en ce que** les copolymères sont présents dans la peinture en poudre finale en une proportion en masse de 0,1 % à 3 %.

11. Utilisation selon la revendication 1, **caractérisée en ce que** les copolymères sont homogénéisés dans la masse fondue avec des résines solides à 20 °C, pour fournir un concentré et, après refroidissement, sont fragmentés, la proportion en masse du copolymère dans le mélange de résine et copolymère étant comprise entre 2 % et 30 %.

12. Utilisation selon la revendication 1, **caractérisée en ce que** les copolymères sont fixés sous forme liquide sur du dioxyde de silicium finement divisé, et on incorpore la poudre obtenue dans la composition de peinture en poudre.

13. Laques en poudre contenant des copolymères qui comportent des motifs des monomères suivants :
**a**) des monomères à insaturation oléfinique, ayant de 5 à 40 atomes de carbone, comportant au moins un groupe hydroxy et au moins une double liaison C=C polymérisable par voie radicalaire, choisis parmi des esters hydroxyalkyliques d'acides carboxyliques à insaturation oléfinique et des mono- et diesters hydroxyalkyliques d'acides dicarboxyliques à insaturation oléfinique,
**b**) des esters alkyliques d'acides monocarboxyliques à insaturation mono-oléfinique ou des diesters alkyliques d'acides dicarboxyliques à insaturation oléfinique ou des mélanges de ceux-ci, où les radicaux alkyle ont de 1 à 18 atomes de carbone, et où les acides carboxyliques ont de 3 à 12 atomes de carbone,
**c**) des esters (per)fluoroalkyliques des acides carboxyliques mentionnés en **b**, où le groupe (per)fluoroalkylique a de 2 à 20 atomes de carbone,
où les motifs monomères précités étant contenus dans le polymère en les proportions massiques suivantes :
**a** : 5% à 50%,
**b** : 35% à 94,8%,
**c:** 0,2 à 15%,
et où la somme des proportions massiques est toujours égale à 100 %.

## Revendications (Revendications pour l'(les) Etat(s) contractant(s) suivant(s): BG, CZ, EE, SK)

1. Utilisation de copolymères contenant des groupes fluoro et des groupes hydroxy, comme additifs dans des laques en poudre, **caractérisée en ce qu'**on utilise des copolymères qui contiennent des motifs des monomères suivants :
**a**) des monomères à insaturation oléfinique, ayant de 5 à 40 atomes de carbone, comportant au moins un groupe hydroxy et au moins une double liaison C=C polymérisable par voie radicalaire, choisis parmi les esters hydroxyalkyliques d'acides carboxyliques à insaturation oléfinique et les mono- et diesters hydroxyalkyliques d'acides dicarboxyliques à insaturation oléfinique,
**b**) des esters alkyliques d'acides monocarboxyliques à insaturation mono-oléfinique ou des diesters alkyliques d'acides dicarboxyliques à insaturation oléfinique ou des mélanges de ceux-ci, où les radicaux alkyle ont de 1 à 18 atomes de carbone, et où les acides carboxyliques ont de 3 à 12 atomes de carbone,
**c)** des esters (per)fluoroalkyliques des acides carboxyliques mentionnés en **b,** où le groupe (per)fluoroalkylique a de 2 à 20 atomes de carbone.

2. Utilisation selon la revendication 1, **caractérisée en ce qu'**on utilise des copolymères qui contiennent les motifs monomères **a, b** et **c** en les proportions massiques suivantes dans le polymère :
**a :** 5% à 50%,
**b :** 35% à 94,8%,
**c**: 0,2 à 15%,
et où la somme de ces proportions massiques est toujours égale à 100 %.

3. Utilisation selon la revendication 1, **caractérisée en ce que** les copolymères utilisés contiennent en outre des motifs dérivés
**d**) de monomères copolymérisables à insaturation oléfinique, qui sont exempts de groupes hydroxy, de groupes acides, de groupes amido et de groupes fluoro, et qui ne rentrent pas dans le groupe **b.**

4. Utilisation selon la revendication 1 ou 3, **caractérisée en ce que** les copolymères utilisés contiennent en outre des motifs dérivés
e) des acides carboxyliques à insaturation oléfinique mentionnés en **b** et/ou des monoesters alkyliques des acides carboxyliques à insaturation oléfinique mentionnés en b, comportant des radicaux alkyle en C₁-C₂₀.

5. Utilisation selon la revendication 3, **caractérisée en ce que** les motifs dérivés des monomères **d** sont contenus dans le copolymère en une proportion en masse allant de 0,2 % à 15 %.

6. Utilisation selon la revendication 4, **caractérisée en ce que** les motifs dérivés des monomères **e** sont contenus dans le copolymère en une proportion en masse allant de 0,2 % à 15 %.

7. Utilisation selon la revendication 1, **caractérisée en ce que** les monomères **a** sont le (méth)acrylate d'hydroxyéthyle, le (méth)acrylate de 3-hydroxypropyle, le méthacrylate de 2-hydroxypropyle et/ou le 2-méthacrylate de 1-hydroxypropyle,

8. Utilisation selon la revendication 1, **caractérisée en ce que** les monomères **b** sont le méthacrylate de méthyle, le (méth)acrylate d'éthyle, le (méth)acrylate de n-butyle, le maléate de diméthyle et/ou le (méth)acrylate de 2-éthylhexyle.

9. Utilisation selon la revendication 1, **caractérisée en ce que** les monomères **c** sont le (méth)acrylate de trifluoroéthyle, le (méth)acrylate d'hexafluoro-isopropyle, le (méth)acrylate d'heptafluorobutyle et/ou le (méth)acrylate de perfluoro-octyle.

10. Utilisation selon la revendication 1, **caractérisée en ce que** les copolymères sont présents dans la peinture en poudre finale en une proportion en masse de 0,1 % à 3 %.

11. Utilisation selon la revendication 1, **caractérisée en ce que** les copolymères sont homogénéisés dans la masse fondue avec des résines solides à 20 °C, pour fournir un concentré et, après refroidissement, sont fragmentés, la proportion en masse du copolymère dans le mélange de résine et copolymère étant comprise entre 2 % et 30 %.

12. Utilisation selon la revendication 1, **caractérisée en ce que** les copolymères sont fixés sous forme liquide sur du dioxyde de silicium finement divisé, et on incorpore la poudre obtenue dans la composition de peinture en poudre.

13. Laques en poudre contenant des copolymères qui comportent des motifs des monomères suivants :
**a**) des monomères à insaturation oléfinique, ayant de 5 à 40 atomes de carbone, comportant au moins un groupe hydroxy et au moins une double liaison C=C polymérisable par voie radicalaire, choisis parmi des esters hydroxyalkyliques d'acides carboxyliques à insaturation oléfinique et des mono- et diesters hydroxyalkyliques d'acides dicarboxyliques à insaturation oléfinique,
**b**) des esters alkyliques d'acides monocarboxyliques à insaturation mono-oléfinique ou des diesters alkyliques d'acides dicarboxyliques à insaturation oléfinique ou des mélanges de ceux-ci, où les radicaux alkyle ont de 1 à 18 atomes de carbone, et où les acides carboxyliques ont de 3 à 12 atomes de carbone,
**c**) des esters (per)fluoroalkyliques des acides carboxyliques mentionnés en **b**, où le groupe (per)fluoroalkylique a de 2 à 20 atomes de carbone.
